# EUROPÄISCHE PATENTANMELDUNG

(11) **EP 1 058 021 A1**
(43) Veröffentlichungstag der Anmeldung: **06.12.2000**
(21) Anmeldenummer: 00110344.9
(22) Anmeldetag: 15.05.2000
(51) Int. Cl.: F16D 63/00

(54) **Magnetische Reibungsbremse**

(30) Priorität: 21.05.1999 DE 19923393
(71) Anmelder: Dimatec Magnet- u. Antriebstechnik GmbH, 40883 Ratingen (DE)
(72) Erfinder: Krome, Walter Dipl.-Ing., 40883 Ratingen (DE)
(74) Vertreter: Stenger, Watzke & Ring Patentanwälte

(57) **Zusammenfassung**

Eine magnetische Reibungsbremse mit einer ferromagnetischen Ankerplatte (11) und einem der Ankerplatte mit Polflächen gegenüberliegenden und relativ zu der Ankerplatte beweglichen, ferromagnetischen Magnetkörper (1), der einen Dauermagneten (10,10') sowie die Wicklung (2) eines Elektromagneten enthält, wobei der Elektromagnet bei elektrischer Ansteuerung die über die Polflächen (4,4';5,5') auf die Ankerplatte wirkende Anzugskraft des Dauermagneten zumindest kompensiert. Zur Erzielung einer besonderen Eignung der Reibungsbremse für einen Linearbetrieb wird vorgeschlagen, daß sich der Magnetkörper (1) aus einem langgestreckten, geraden Außenprofil (24) mit rechteckiger Basis (25) und zueinander parallelen Seitenwänden (26,26') sowie ferner aus mindestens einem in das Außenprofil eingesetzten geraden Winkelprofil (27,27') zusammensetzt. Der erste Schenkel (6,6') des Winkelprofils erstreckt sich parallel zu den Seitenwänden des Außenprofils (24) und bildet mit seinem freien Rand eine innere Polfläche (4,4'). Ein weiterer Schenkel (7,7') des Winkelprofils bildet einen zwischen dem Dauermagneten und der Wicklung des Elektromagneten angeordneten Polschuh (7,7'). Der erste Schenkel (6,6') des Winkelprofils erstreckt sich ausschließlich entlang solcher Streckenabschnitte der geschlossenen Wicklung (2), die parallel zur Längsachse (8) des Magnetkörpers verlaufen.

## Beschreibung

Die Erfindung betrifft eine magnetische Reibungsbremse mit einer ferromagnetischen Ankerplatte und einem der Ankerplatte mit Polflächen gegenüberliegenden und relativ zu der Ankerplatte beweglichen, ferromagnetischen Magnetkörper, der einen Dauermagneten sowie einen Elektromagneten enthält, wobei der Elektromagnet bei elektrischer Ansteuerung die über die Polflächen auf die Ankerplatte wirkende Anzugskraft des Dauermagneten zumindest kompensiert.

Das Prinzip einer solchen magnetischen Reibungsbremse ist aus der EP 0 189 109 B1 bekannt. Die Reibungsbremse ist in stromlosen Zustand aufgrund des integrierten Dauermagneten wirksam und in bestromtem Zustand unwirksam. Auf diese Weise kann die Reibungsbremse eine Sicherheitsfunktion bei Stromausfall erfüllen.

Die magnetische Reibungsbremse nach der EP 0 189 109 B1 hat sich allerdings nicht als für alle Anwendungen geeignet herausgestellt. Für das Abbremsen rotierender Teile werden gute Ergebnisse erzielt, hingegen nicht beim Abbremsen linearer Bewegungen.

Für den Einsatz bei Linearantrieben ist aus der DE 34 34 116 A1 eine elektromagnetische Bremse bekannt, die über nur einen für die Haftkraft wirksamen Magnetpol verfügt. Die Auslegung des Permanentmagneten einerseits und des Elektromagneten andererseits ist dergestalt, daß ein positiver bzw. negativer Stromimpuls des Elektromagneten die Kraft des Permanentmagneten verstärkt bzw. schwächt und auf diese Weise ein Anziehen bzw. Abfallen der Bremse bewirkt. Für das Abbremsen einer Linearbewegung arbeitet die bekannte Bremse nicht spielfrei, da der kolbenförmige Magnetpol ein Führungsspiel benötigt, das sich im Dauerbetrieb aufgrund der Schaltvorgänge noch vergrößern kann oder infolge von Abriebpartikeln oder Fremdpartikeln blockiert werden kann.

Der Erfindung liegt die **Aufgabe** zugrunde, eine magnetische Reibungsbremse zu schaffen, die sich besonders gut für den Einsatz im Linearbetrieb eignet. Angestrebt ist desweiteren ein möglichst geringes Bauvolumen mit geringer Bauhöhe und Baubreite der Reibungsbremse bei zugleich hoher nutzbarer Reibungskraft, d. h. hohem magnetischen Wirkungsgrad.

Zur **Lösung** dieser Aufgabe wird bei einer magnetischen Reibungsbremse der eingangs genannten Art vorgeschlagen, daß sich der Magnetkörper aus einem langgestreckten, geraden Außenprofil mit rechteckiger Basis und zueinander parallelen Seitenwänden, deren freie Ränder äußere Polflächen bilden, sowie aus mindestens einem in das Außenprofil eingesetzten geraden Winkelprofil zusammensetzt, dessen erster Schenkel sich parallel zu den Seitenwänden des Außenprofils erstreckt und mit seinem freien Rand eine innere Polfläche bildet, und dessen weiterer Schenkel einen zwischen dem Dauermagneten und der Wicklung des Elektromagneten angeordneten Polschuh bildet, und daß sich der erste Schenkel des Winkelprofils ausschließlich entlang solcher Streckenabschnitte der geschlossenen Wicklung erstreckt, die parallel zur Längsachse des Magnetkörpers verlaufen.

Eine solche Reibungsbremse eignet sich in besonderer Weise für den Einsatz in Verbindung mit linear ablaufenden Bewegungen und vor allem Linearantrieben. Bei geringem Bauvolumen mit geringer Bauhöhe und Baubreite wird ein hoher magnetischer Wirkungsgrad und damit eine hohe nutzbare Reibungskraft erzielt. Ein weiterer Vorteil besteht in einer kostengünstigen Herstellbarkeit, weil im Gegensatz zu den Bauteilen eines rotationssymmetrischen Magnetkörpers nur ein Bruchteil von Zerspanungsarbeit und damit eine äußerst hohe Materialausnutzung erzielt wird.

Vorzugsweise sind in den Magnetkörper parallel zueinander zwei spiegelsymmetrisch zueinander angeordnete Winkelprofile eingesetzt, die gemeinsam die Wicklung des Elektromagneten aufnehmen. Dieser symmetrische Aufbau führt zu einem kompakten Aufbau der Reibungsbremse bei hohem Wirkungsgrad und damit in bezug auf die Baugröße hohen Reibungskräften.

Vorzugsweise ist, in Längsrichtung des Magnetkörpers betrachtet, der erste Schenkel des Winkelprofils an beiden Enden gegenüber dem weiteren Schenkel verkürzt gestaltet. Auf diese Weise ist es möglich, trotz des nur aus magnetisierbaren Metallprofilen zusammengesetzten Magnetkörpers die Wicklung des Elektromagrieten vollständig innerhalb der Außenkontur des Magnetkörpers unterzubringen. Auf diese Weise wird eine Beschädigung der empfindlichen Wicklung durch äußere Einflüsse vermieden. Außerdem wird es möglich, mehrere gleichartige Reibungsbremsen in Reihe unmittelbar hintereinander anzuordnen, ohne daß sich die Wicklungen benachbarter Reibungsbremsen berühren.

Zur Erzielung einer möglichst großen dauermagnetischen Flußaufnahme bei gleichzeitiger Sicherstellung eines hohen magnetischen Wirkungsgrades ist es ferner von Vorteil, wenn der weitere Schenkel des Winkelprofils dieselbe Länge wie das Außenprofil aufweist und stirnseitig mit diesem abschließt.

Die Dauermagneten, die ein- oder mehrteilig ausgebildet sein können, erstrecken sich vorzugsweise entlang des gesamten weiteren Schenkels des Winkelprofils.

Eine weitere bevorzugte Ausgestaltung der Erfindung ist gekennzeichnet durch einen eingestellten Luftspalt zwischen dem Außenprofil des Magnetkörpers und dem zwischen Wicklung und Dauermagnet angeordneten Polschuh. Um die magnetische Kompensation sehr exakt justieren zu können, wird desweiteren ein an beiden Winkelprofilen zugleich einliegendes Leitstück vorgeschlagen, welches mindestens einen zusätzlichen Luftspalt zu dem Außenprofil definiert.

Mit einer weiteren Ausgestaltung wird vorgeschlagen, daß der Magnetkörper oder die Ankerplatte über ein auf Zug wirkendes Federelement beweglich an einem Trägerteil befestigt ist, wobei das Trägerteil Bestandteil einer in Längsrichtung des Magnetkörpers linear geführten Vorrichtung ist. Vorzugsweise ist das Federelement eine rechteckförmige Blattfeder, die einerseits an der Basis des Magnetkörpers und andererseits am Trägerteil befestigt und so dimensioniert ist, daß sowohl die Biegewilligkeit für das Luftspiel gegeben ist, als auch die Reibungskraft zwischen Primär- und Sekundärteil spielfrei von ihr allein übertragen wird. Eine solche Zugfeder hat sich für die besonderen Verhältnisse bei einer linearen Relativbewegung zwischen Ankerplatte einerseits und Magnetkörper andererseits als besonders geeignet herausgestellt. Jegliches Spiel bei der Linearbewegung ist ausgeschlossen, so daß auch Reibungsprobleme innerhalb der Reibungsbremse nicht auftreten können. Durch Verwendung einer rechteckförmigen Blattfeder als Rückzugfeder ergibt sich außerdem eine gute Lagestabilität sowie eine gute Abfuhr der im Betrieb der magnetischen Reibungsbremse in dem Magnetkörper auftretenden Wärme.

Vorzugsweise beträgt das Länge/Breite-Verhältnis des Magnetkörpers zwischen 2:1 und 3:1. Versuche haben ergeben, daß bei einem solchen Verhältnis und einem Bauvolumen des Magnetkörpers von 0,1 dm³ eine in Längsrichtung an der Ankerplatte wirksame Reibungskraft von 200 N innerhalb von 15 ms wirksam und innerhalb von 25 ms völlig unwirksam und ohne besondere elektrische Maßnahmen mit einer Leistung von nur 20 W geschaltet werden kann.

Zur weiteren Erhöhung der Reibungskraft können bei Bedarf mehrere der Reibungsbremsen in Reihe unmittelbar nebeneinander oder mit Lücke angeordnet werden. Bei unmittelbar benachbarter Anordnung stoßen die quaderförmigen Magnetkörper mit ihren Stirnflächen unmittelbar aneinander.

Von Vorteil ist es, wenn das Außenprofil des Magnetkörpers eine gewisse Flexibilität um die Längsachse aufweist. Hierzu wird in einer ersten Variante vorgeschlagen, daß die Basis des Außenprofils durch eine Längsnut in Stegmitte definiert biegewillig geschwächt ist. Gemäß einer zweiten Variante besteht das Außenprofil aus zwei getrennten Winkelprofilen, die an ihrer Stoßstelle durch partielle Schweißstellen biegewillig miteinander verbunden sind. Gemäß einer dritten Variante besteht das Außenprofil aus zwei getrennten Winkelprofilen, die mit einem biegewilligen Trägerelement verbunden sind.

Auf der Zeichnung sind Ausführungsformen der Erfindung dargestellt. Es zeigen:
- Fig. 1: eine Draufsicht auf eine erfindungsgemäße magnetische Reibungsbremse bei abgenommener Ankerplatte;
- Fig. 2: einen Schnitt durch die Reibungsbremse nach Fig. 1 entlang der Schnittebene II-II, einschließlich der Ankerplatte, wobei in den beiden Schnitthälften einmal der bestromte Zustand (links) und einmal der unbestromte Zustand (rechts) dargestellt ist;
- Fig. 3: ein der Fig. 2 entsprechender zweigeteilter Schnitt bei einer gegenüber den Fig. 1 und 2 modifizierten Ausführungsform der Reibungsbremse;
- Fig. 4: eine erste Variante des Außenprofils der Reibungsbremse;
- Fig. 5: eine zweite Variante des Außenprofils der Reibungsbremse und
- Fig. 6: eine dritte Variante des Außenprofils der Reibungsbremse.

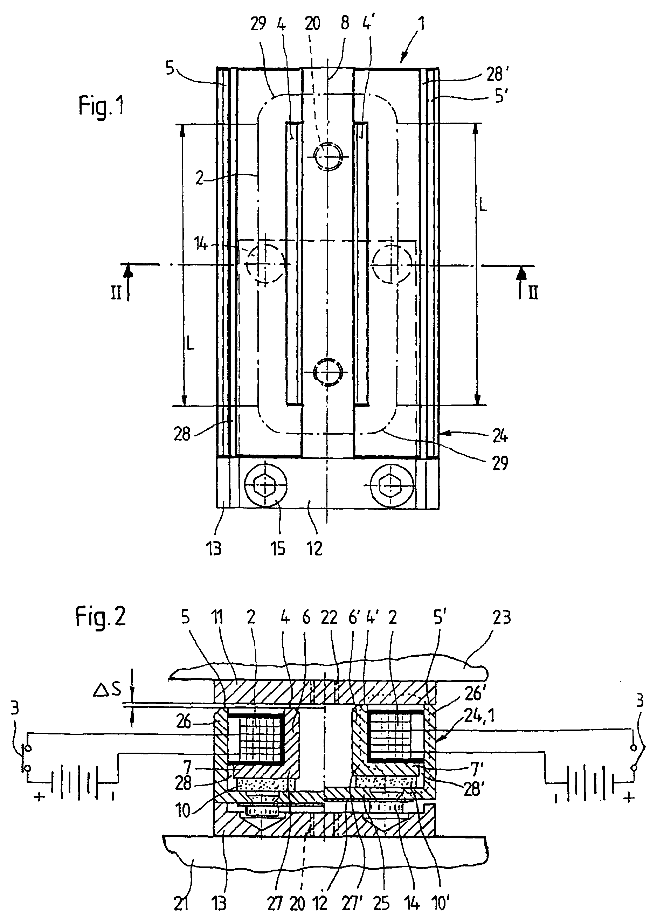

Bei der in den Fig. 1 und 2 dargestellten quaderförmigen Anordnung ist in einem magnettechnisch unterteilten Magnetkörper 1 die Wicklung 2 eines Elektromagneten angeordnet, die sich mittels eines Schalters 3 mit Gleichstrom erregen läßt. Der Magnetkörper weist zwei innenliegende Polflächen 4, 4' und zwei außenliegende Polfläche 5, 5' auf, die sich parallel zueinander und gerade erstrecken, in einer gemeinsamen Ebene liegen und mit der ihnen zugewandten Fläche einer Ankerplatte 11 als Friktionsflächen zusammenarbeiten. Die ovale Wicklung 2 einschließlich der geraden Streckenabschnitte L der Wicklung ist in Fig. 1 aus Gründen der Übersicht nur symbolisch durch eine strichpunktierte Linie angedeutet, wohingegen die Wicklung in der Schnittdarstellung nach Fig. 2 einschließlich ihres aus Isolierwerkstoff hergestellten Wickelkörpers dargestellt ist. Die inneren Polflächen 4, 4' befinden sich an den äußeren Rändern von inneren Leitpolen 6, 6', die Bestandteil jeweils eines Winkelprofils sind, an dem sich ferner ein nach außen gerichteter Polschuh 7, 7' befindet. Zwischen den Polschuhen 7, 7' und einer Basis des Magnetkörpers sind anisotopisch magnetisierte Dauermagnete 10, 10' angeordnet, die den für die hohe Haftkraft erforderlichen dauermagnetischen Fluß bewirken. Dieser Fluß wird je nach Stellung des Schalters 3 auf die Ankerplatte 11 wirksam oder unwirksam geschaltet, sein Verlauf ist in Fig. 2 punktiert angedeutet. Bei Bestromung der Wicklung 2 wird ein elektromagnetischer Fluß erzeugt, der bei entsprechender Polung dem dauermagnetischen Fluß entgegenwirkt, so daß sich an den Polflächen 4, 4', 5, 5' die Magnetkräfte aufheben und eine Relativbewegung zwischen Primär- und Sekundärteil frei von Magnetkraft möglich ist. Fig. 2 stellt in der rechten Schnitthälfte die wirksame, d. h. gebremste Situation, und in der linken Schnitthälfte die unwirksame Situation bei bestromtem Elektromagneten dar. Zur restkraftfreien Funktion ist es dabei erforderlich, daß der Magnetkörper 1 als Primärteil und die Ankerplatte 11 als Sekundärteil durch ein Federelement um einen geringen Lüftweg ΔS getrennt werden. Entsprechend ist der Magnetkörper 1 über eine Blattfeder 12 mit seinem Trägerteil 13 verbunden, und zwar einerseits mittels Nieten 14 am Magnetkörper 1 und andererseits mittels Schrauben 15 am Trägerteil 13.

Der Magnetkörper 1 ist als Primärteil über ein Gewinde 20 mit dem in Fig. 2 nur anhand einer Ebene symbolisierten Linearschlitten 21 verbunden, wobei auch der Linearschlitten 21 bei entsprechender Ausbildung des auf Zug arbeitenden Federelements direkt als Träger dienen kann.

Die Ankerplatte 11 ist als Sekundärteil über ein Gewinde 22 mit dem ebenfalls nur anhand einer Ebene 23 angedeuteten Linearstator verbunden, wobei auch der Linearstator direkt als Magnetanker wirken kann, sofern er aus ferromagnetischem Material besteht. Auch die umgekehrte Anordnung, Primärteil als Stator und Sekundärteil am Schliffen kann je nach Zweckmäßigkeit realisiert werden. Für das gesamte System gilt eine lageunabhängige Funktion.

Der Magnetkörper 1 setzt sich ausschließlich aus langgestreckten Metallprofilen zusammen. Das Gehäuse des Magnetkörpers wird durch das Außenprofil 24 gebildet, welches sich aus der Basis 25 und den beiden Seitenwänden 26, 26' zusammensetzt. Die freien Ränder der beiden Seitenwände 26, 26' bilden die äußeren Polflächen 5, 5'.

In das Außenprofil 24 sind die beiden Winkelprofile 27, 27' des Magnetkörpers eingesetzt, die, ebenso wie das Außenprofil 24, aus ferromagnetischem Werkstoff bestehen. Die Winkelprofile 27, 27' setzen sich, wie weiter oben bereits beschrieben, aus den zueinander in rechtem Winkel stehenden Leitpolen 6, 6' sowie den Polschuhen 7, 7' zusammen. Hierbei bilden die Leitpole 6, 6' den ersten Schenkel des Winkelprofils, der sich parallel zu den Seitenwänden 26, 26' des Außenprofils erstreckt, wohingegen die Polschuhe 7, 7' einen weiteren Schenkel bilden, der den zwischen den Dauermagneten 10, 10' und der Wicklung 2 des Elektromagneten angeordneten Palschuh 7, 7' bildet. Zwischen dem äußeren Rand dieses Polschuhs 7, 7' und der gegenüberliegenden Seitenwand 26, 26' des Außenprofils 24 befindet sich jeweils ein Luftspalt 28, 28' für den von dem Elektromagneten aufgebauten Magnetkreis.

Sämtliche Profile 24, 27, 27' sind gerade und Ianggestreckt und lassen sich auf diese Weise relativ preisgünstig herstellen. Eine Besonderheit der beiden spiegelsymmetrisch zueinander angeordneten Winkelprofile 27, 27', um deren ersten Schenkel 6, 6' herum die Wicklung 2 gelegt ist, besteht in der unterschiedlichen Länge der die Leitpole bildenden ersten Schenkel 6, 6' einerseits und der die Polschuhe bildenden weiteren Schenkel 7, 7' andererseits. In Längsrichtung des Magnetkörpers betrachtet, ist der erste Schenkel 6, 6' des Winkelprofils an beiden Enden gegenüber dem weiteren Schenkel 7, 7' verkürzt gestaltet. Auf diese Weise wird Platz für die Umlenkung 29 der Wicklung 2 an den Enden des Magnetkörpers geschaffen, ohne daß dort die Wicklung 2 aus dem Gehäuse des Magnetkörpers 1 herausragt. Insbesondere ist damit auch eine möglichst große Eintrittsfläche für den dauermagnetischen Fluß für hohen magnetischen Wirkungsgrad gegeben.

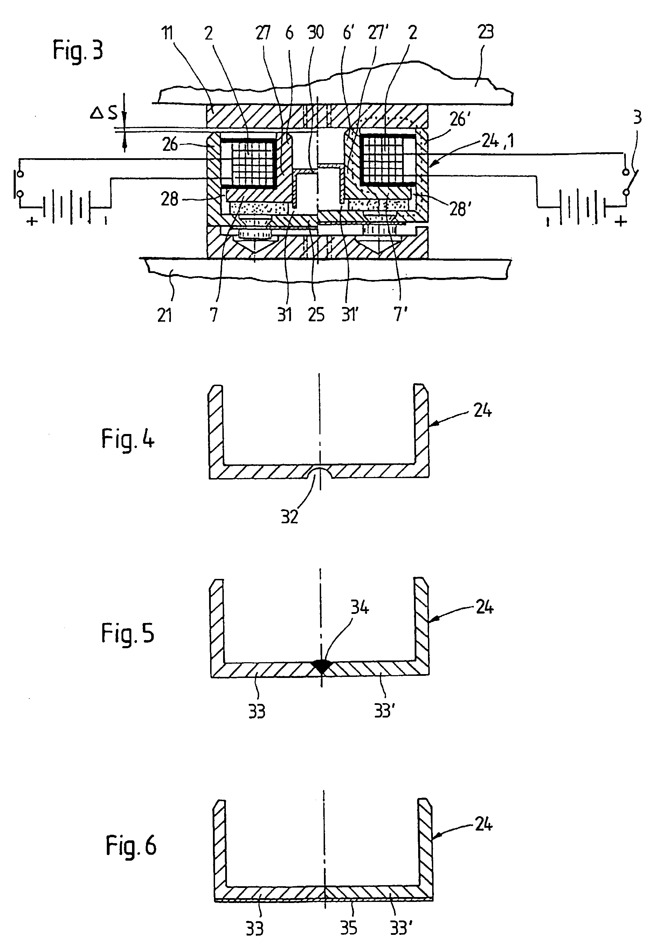

Bei der in Fig. 3 dargestellten Variante ist der Grundaufbau gleich zu Fig. 2, jedoch bewirkt das zusätzlich angeordnete, mechanisch einstellbare Leitstück 30 aus ferromagnetischem Material einen dritten und vierten Nebenschluß infolge der einstellbaren Luftspalte 31, 31'. Hierzu liegt das Leitstück 30 zugleich an beiden Winkelprofilen 27, 27' klemmend an. Die Reibungsbremse läßt sich unter Verwendung des Leitstücks 30 auf einfache Weise kalibrieren. Dabei ist sichergestellt, daß bei aufliegender Ankerplatte 11 kein wesentlicher dauermagnetischer Flußverlust durch die Luftspalte 31, 31' eintreten kann und der maximal mögliche Energieinhalt der Dauermagnete 10, 10' sehr ökonomisch zur Erzielung der Reibungskraft ausgenutzt wird.

Die Bereiche zwischen den Leitpolen 6, 6' und den Seitenwänden 26, 26' einschließlich der Wicklung 2 können mit einer Vergußmasse verfüllt sein. Diese ist vorzugsweise ein Friktionsmaterial, dessen Reibfläche mit den Magnetpolen bündig abschließt.

Fig. 4 stellt eine vorteilhafte Ausbildung des U-förmigen Außenprofils 24 des Magnetkörpers dar. Infolge der Längsnut 32 in der Mitte der Basis 25 ist eine bestimmte Biegewilligkeit um die Längsachse 8 gegeben, um so eine satte Auflage der Polflächen und damit eine gleichbleibende Reibungskraft bei Wärmespannungen zu begünstigen.

Fig. 5 stellt eine weitere Ausführungsform des U-förmigen Außenprofils aus zwei ferromagnetischen Winkelprofilen 33, 33' dar, die an ihrer Stoßstelle durch partielles Verschweißen 34 ebenfalls definiert biegewillig zusammengehalten sind.

Fig. 6 stellt eine weitere Ausführungsform des U-förmigen Außenprofils 24 dar, bei dem die zwei Winkelprofile 33, 33' auf einem nachgiebigen Trägerelement 35 angeordnet sind. Das Trägerelement besteht vorzugsweise aus Federstahl.

Die beschriebene Reibungsbremse zeichnet sich durch ein geringes Bauvolumen, und insbesondere eine geringe Bauhöhe und Baubreite aus, wobei trotzdem eine hohe nutzbare Reibungskraft bei hohem magnetischem Wirkungsgrad erzielt wird. Infolge der Kompaktheit ist auch die Masse der Reibungsbremse gering, so daß kurze Schaltzeiten im Millisekundenbereich erzielt werden. Innere Reibungsprobleme und jegliches Spiel für die Linearbewegung sind ausgeschlossen, ferner wird eine satte Polflächenauflage bei im praktischen Betrieb auftretenden Wärmespannungen begünstigt.

Infolge des beschriebenen Aufbaus des Magnetkörpers wird die Reibungskraft bereits mit geringer dauermagnetischer Energie erreicht und mit geringer elektromagnetischer Energie bei sehr kurzen Schaltzeiten vollständig aufgehoben, wodurch eine absolut restkraftfreie Relativbewegung zwischen Primär- und Sekundärteil möglich ist.

### Bezugszeichenliste

- 1: Magnetkörper
- 2: Wicklung
- 3: Schalter
- 4: Polfläche innen
- 4': Polfläche innen
- 5: Polfläche außen
- 5': Polfläche außen
- 6: erster Schenkel, Leitpol
- 6': erster Schenkel, Leitpol
- 7: weiterer Schenkel, Polschuh
- 7': weiterer Schenkel, Polschuh
- 8: Längsachse
- 10: Dauermagnet
- 10': Dauermagnet
- 11: Ankerplatte
- 12: Federelement
- 13: Trägerteil
- 14: Niet
- 15: Schraube
- 20: Gewinde
- 21: Linearschlitten
- 22: Gewinde
- 23: Ebene des Linearstators
- 24: Außenprofil
- 25: Basis
- 26: Seitenwand
- 26': Seitenwand
- 27: Winkelprofil
- 27': Winkelprofil
- 28: Luftspalt
- 28': Luftspalt
- 29: Umlenkung der Wicklung
- 30: Leitstück
- 31: Luftspalt
- 31': Luftspalt
- 32: Längsnut
- 33: Winkelprofil
- 33': Winkelprofil
- 34: Verschweißen
- 35: Trägerelement
- L: Streckenabschnitt der Wicklung
- ΔS: Lüftspiel

## Patentansprüche

1. Magnetische Reibungsbremse mit einer ferromagnetischen Ankerplatte (11) und einem der Ankerplatte (11) mit Polflächen (4, 4'; 5, 5') gegenüberliegenden und relativ zu der Ankerplatte beweglichen, ferromagnetischen Magnetkörper, der einen Dauermagneten (10, 10') sowie einen Elektromagneten enthält, wobei der Elektromagnet bei elektrischer Ansteuerung die über die Polflächen auf die Ankerplatte wirkende Anzugskraft des Dauermagneten zumindest kompensiert,
**dadurch gekennzeichnet,**
daß sich der Magnetkörper aus einem langgestreckten, geraden Außenprofil (24) mit rechteckiger Basis (25) und zueinander parallelen Seitenwänden (26, 26'), deren freie Ränder äußeren Polflächen (5, 5') bilden, sowie aus mindestens einem in das Außenprofil (24) eingesetzten geraden Winkelprofil (27, 27') zusammensetzt, dessen erster Schenkel (6, 6') sich parallel zu den Seitenwänden (26, 26') des Außenprofils (24) erstreckt und mit seinem freien Rand eine innere Polfläche (4, 4') bildet, und dessen weiterer Schenkel (7, 7') einen zwischen dem Dauermagneten (10, 10') und der Wicklung (2) des Elektromagneten angeordneten Polschuh bildet und daß sich der erste Schenkel (6, 6') des Winkelprofils (27, 27') ausschließlich entlang solcher Streckenabschnitte (L) der geschlossenen Wicklung (2) erstreckt, die parallel zur Längsachse (8) des Magnetkörpers (1) verlaufen.

2. Reibungsbremse nach Anspruch 1, dadurch gekennzeichnet, daß in den Magnetkörper (1) parallel zueinander zwei spiegelbildlich zueinander angeordnete Winkelprofile (27, 27') eingesetzt sind, die gemeinsam die Wicklung (2) des Elektromagneten aufnehmen.

3. Reibungsbremse nach Anspruch 1 oder Anspruch 2, dadurch gekennzeichnet, daß, in Längsrichtung des Magnetkörpers betrachtet, der erste Schenkel (6, 6') des Winkelprofils (27, 27') an beiden Enden gegenüber dem weiteren Schenkel (7, 7') verkürzt gestaltet ist.

4. Reibungsbremse nach Anspruch 3, dadurch gekennzeichnet, daß der weitere Schenkel (7, 7') des Winkelprofils (27, 27') dieselbe Länge wie das Außenprofil (24) aufweist und stirnseitig mit diesem abschließt.

5. Reibungsbremse nach einem der Ansprüche 1 bis 4, dadurch gekennzeichnet, daß sich die ein- oder mehrteiligen Dauermagneten (10, 10') entlang des gesamten weiteren Schenkels (7, 7') des Winkelprofils (27, 27').

6. Reibungsbremse nach einem der Ansprüche 1 bis 5, gekennzeichnet durch einen eingestellten Luftspalt (28, 28') zwischen dem Außenprofil (24) des Magnetkörpers und dem zwischen Wicklung (2) und Dauermagnet (10, 10') angeordneten Polschuh (7, 7').

7. Reibungsbremse nach Anspruch 6, gekennzeichnet durch ein an beiden Winkelprofilen (27, 27') zugleich anliegendes Leitstück (30), welches mindestens einen zusätzlichen Luftspalt (31, 31') zu dem Außenprofil (24) definiert.

8. Reibungsbremse nach einem der vorangehenden Ansprüche, dadurch gekennzeichnet, daß der Magnetkörper (1) oder die Ankerplatte (11) über ein auf Zug wirkendes Federelement (12) beweglich an einem Trägerteil (21; 23) befestigt ist, wobei das Trägerteil (21; 23) Bestandteil einer in Längsrichtung des Magnetkörpers linear geführten Vorrichtung ist.

9. Reibungsbremse nach Anspruch 8, dadurch gekennzeichnet, daß das Federelement (12) eine rechteckförmige Blattfeder ist, die einerseits an der Basis des Magnetkörpers (1) und andererseits am Trägerteil befestigt und so dimensioniert ist, daß sowohl die Biegewilligkeit für das Lüftspiel (ΔS) gegeben ist als auch die Reibungskraft zwischen Primär- und Sekundärteil spielfrei von ihr allein übertragen wird.

10. Reibungsbremse nach einem der vorangehenden Ansprüche, dadurch gekennzeichnet, daß das Länge/Breite-Verhältnis des Magnetkörpers zwischen 2:1 und 3:1 beträgt.

11. Reibungsbremse nach einem der Ansprüche 1 bis 10, dadurch gekennzeichnet, daß die Basis (25) des Außenprofils (24) durch eine Längsnut (32) in Stegmitte definiert biegewillig geschwächt ist.

12. Reibungsbremse nach einem der Ansprüche 1 bis 10, dadurch gekennzeichnet, daß das Außenprofil (24) aus zwei getrennten Winkelprofilen (33, 33') besteht, die an ihrer Stoßstelle durch partielle Schweißstellen biegewillig miteinander verbunden sind.

13. Reibungsbremse nach einem der Ansprüche 1 bis 10, dadurch gekennzeichnet, daß das Außenprofil (24) aus zwei getrennten Winkelprofilen (33, 33') besteht, die mit einem biegewilligen Trägerelement (35) verbunden sind.
